# EUROPÄISCHE PATENTANMELDUNG

(11) **EP 1 278 047 A2**
(43) Veröffentlichungstag der Anmeldung: **22.01.2003**
(21) Anmeldenummer: 02405532.9
(22) Anmeldetag: 25.06.2002
(51) Int. Cl.: G01F 15/06

(54) **Abtastverfahren für Durchflussmessgeräte**

(30) Priorität: 16.07.2001 DE 10134456
(71) Anmelder: ABB RESEARCH LTD., 8050 Zürich (CH)
(72) Erfinder: Kramer, Beat, 5210 Windisch (CH); Matter, Daniel, 5200 Brugg (CH); Kleiner, Thomas, 5442 Fislisbach (CH)
(74) Vertreter: ABB Patent Attorneys

(57) **Zusammenfassung**

Die vorliegende Erfindung hat ein Abtastverfahren für Durchflussmessgeräte zum Gegenstand, bei welchem die Abtastrate in Abhängigkeit der verbleibenden Speisequellenlebensdauer verringert wird. Letztere wird dadurch auf Kosten der Genauigkeit verlängert.

## Beschreibung

### TECHNISCHES GEBIET

Die vorliegende Erfindung bezieht sich auf das Gebiet der autonom gespiesenen Durchflussmessgeräte wie batteriebtriebene Gasmeter oder Wasserzähler. Sie betrifft ein Abtastverfahren zur Bestimmung eines Gesamtverbrauchs nach dem Oberbegriff des Patentanspruchs 1.

### STAND DER TECHNIK

In der noch unveröffentlichten Europäischen Patentanmeldung Nr 00810511.6 ist ein Gasenergiemessgerät basierend auf einem kostengünstigen CMOS Durchflussensor dargestellt, welches einen Erdgas-Verbrauch bestimmt und aufgrund der angewendeten Messmethode eine Eichung in Normvolumen oder direkt in Gasenergie ermöglicht. Die Eichung in Normvolumen ist deshalb möglich, da das neue Gasmeter den (druck- und temperaturunabhängigen) Massenfluss bestimmt und damit die Umrechnung in ein dem Gas entsprechendem Volumen unter Normbedingungen (z.B. 20°C, 1 bar) einfach zu bewerkstelligen ist. Da das Messsignal dieses neuen Gasmeters aufgrund seiner Sensitivität bezüglich den drei Hauptkomponenten (Methan, Ethan und Propan) entsprechend deren spezifischen Brennwerte richtig gewichtet ist es zusätzlich möglich das Gerät direkt in Energie zu eichen.

Bei einem derartigen Gasmeter werden periodisch, beispielsweise alle zwei Sekunden, physikalische Grössen wie Massenfluss, Volumenfluss oder Gasenergie gemessen. Diese Momentanwerte werden anschliessend im Gasmeter selbst integriert und der integrierte Gesamtverbrauch periodisch, beispielsweise monatlich oder halbjährlich, an eine Zentrale übermittelt.

Elektronische Durchflussmessgeräte wie Wasserzähler, Heisswasserzähler, elektrische Energiezähler oder Gasmeter werden meist mit einer Batterie gespiesen. Dabei wird gefordert, dass das Gerät ohne Batteriewechsel einige Jahre betrieben werden kann. Der Zustand der Batterie muss laufend überwacht werden. Ungefähr ein halbes Jahr vor Ende der Lebensdauer der Batterie muss eine Warnung ausgegeben werden (z.B. durch die Statusanzeige LOW BAT). Wird die Batterie in diesem halben Jahr nicht ersetzt, so wird das Gasmeter nicht mehr gespiesen und seine Funktion kann nicht mehr gewährleistet werden. Dem Gaslieferanten gehen dadurch Messwerte und Einnahmen für den Verbrauch in den Tagen verloren, in denen das Gerät nicht läuft.

Das Gasmeter misst den Gasdurchfluss mit einer max. Abtastrate von 0.5 Messungen/Sekunde (Messintervall von 2 Sekunden). Damit wird eine genügend grosse Genauigkeit des Gerätes erreicht. Wird das Messintervall vergrössert, so nimmt die Genauigkeit ab.

### DARSTELLUNG DER ERFINDUNG

Aufgabe der vorliegenden Erfindung ist es, die Einsatz- oder Messbereitschaft von batteriegespiesenen oder sonstwie autonomen Durchflussmessgeräten zu erhöhen. Diese Aufgabe wird durch ein Abtastverfahren mit den Merkmalen des Patentanspruchs 1 gelöst.

Kern der Erfindung ist es, kurz vor dem vorhersehbaren Ende der autonomen Speisequelle die Abtastrate zu reduzieren. Dadurch werden auf Kosten der Genauigkeit weniger Abtastungen pro Zeiteinheit gemacht und die Lebensdauer der Speisequelle verlängert.

Es ist in diesem Zusamenhang wichtiger, Messwerte zu erfassen, auch wenn diese nicht die selbe Genauigkeit erreichen wie im Betrieb des Messgeräts mit der normalen Abtastrate. Dafür hat der Lieferant aber über eine längere Zeitspanne Informationen über den tatsächlichen Gasverbrauch und damit eine Verrechnungsgrundlage.

Vorteilhafte Ausführungsformen gehen aus den abhängigen Patentansprüchen hervor.

### KURZE BESCHREIBUNG DER FIGUREN

Nachfolgend wird die Erfindung anhand von Ausführungsbeispielen im Zusammenhang mit den Zeichnungen näher erläutert. Es zeigt
Fig. 1 den Stromverbrauch eines Durchflussmessgeräts in Funktion der Abtastrate und
Fig.2 schematisch eine erfindungsgemässe Lebensdauerverlängerung.

### WEGE ZUR AUSFÜHRUNG DER ERFINDUNG

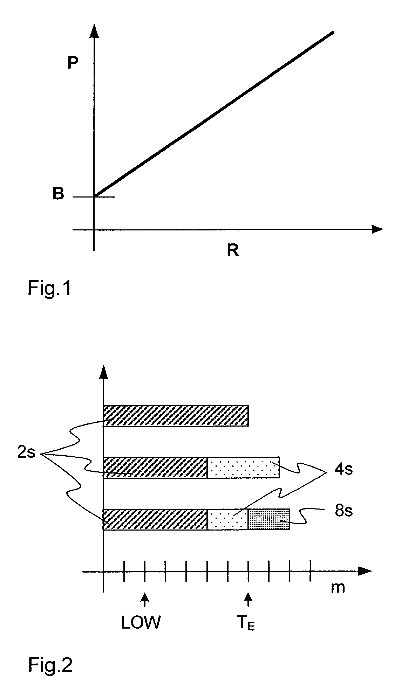

In Fig.1 ist die von einem Durchflussmessgerät verbrauchte Leistung P in Abhängigkeit einer Abtastrate R dargestellt. Der Leistungs- oder stromverbrauch des Messgeräts besteht aus einer gewissen Basislast B (Display mit Driver, Mikrocontroller im Sleep Mode, Leckströme von anderen Komponenten) sowie einem Anteil, welcher im wesentlichen linear zur Abtastrate R zunimmt (Sensor, Mikrocontroller im Betrieb). Im Normalfall wird das Gerät mit einer bezüglich Leistungsverbrauch und Messgenauigkeit optimalen Abtastrate betrieben.

In Fig.2 ist auf einer Zeitskala mit Monatseinteilung dargestellt, wie die Lebensdauer der Speisequelle dank der erfindungsgemässen Anpassung des Messintervalls um mindestens zwei Monate über das prognostizierte Ende T_{E} verlängert werden kann. Zum Zeitpunkt LOW erscheint eine Betriebszustandsanzeige, welche zum Wechsel der Batterien auffordert. Ist dies drei Monate nach dem ersten Erscheinen des LOW-Status oder beim Unterschreiten einer beispielsweise durch eine Speisespannungsschwelle definierten Restlebensdauer noch nicht erfolgt, so wird auf die halbe Abtastrate gewechselt, d.h. das Messintervall von 2s auf 4s erhöht. Damit wird die Messgenauigkeit des Gerätes reduziert, aus den ursprünglich verbleibenden zwei Monaten werden aber ca. drei bis dreieinhalb Monate Restlebensdauer. Das selbe Prozedere kann nach weiteren zwei Monaten, d.h. gemäss Fig.2 zum urprünglich prognostizierten Speisequellenende T_{E}, erneut durchgeführt werden, in dem die geänderte Abtastrate noch einmal halbiert beziehungsweise das Messintervall auf 8s verdoppelt wird. Die Gesamtlebensdauer der Speisequelle wird dadurch auf über zwei Monate über T_{E} erhöht.

## Patentansprüche

1. Abtastverfahren für Durchflussmessgeräte mit einer autonomen Speisequelle, wobei mit einer bestimmten Abtastrate momentane Durchflusswerte ermittelt und aufintegriert werden,
**dadurch gekennzeichnet, dass** die Abtastrate von einer Restlebensdauer der Speisequelle abhängt.

2. Abtastverfahren nach Anspruch 1, **dadurch gekennzeichnet, dass** die Speisequelle eine Batterie ist und die Restlebensdauer von der Batteriespannung abgeleitet wird.

3. Abtastverfahren nach Anspruch 1, **dadurch gekennzeichnet, dass** die Abtastrate beim Unterschreiten einer ersten Restlebensdauer reduziert und insbesondere halbiert wird.

4. Abtastverfahren nach Anspruch 3, **dadurch gekennzeichnet, dass** die Abtastrate beim Unterschreiten einer zweiten Restlebensdauer nochmals reduziert und insbesondere halbiert wird.

5. Verwendung eines Abtastverfahrens nach einem der Ansprüche 1 ―4 in einem Durchflussmessgerät, **dadurch gekennzeichnet, dass** das Durchflussmessgerät ein Wasserzähler, Heisswasserzähler, elektrischer Energiezähler oder ein Gasmeter ist.
